# DEMANDE DE BREVET EUROPEEN

(11) **EP 3 981 712 A1**
(43) Date de publication de la demande: **13.04.2022**
(21) Numéro de dépôt: 21020455.8
(22) Date de dépôt: 09.09.2021
(51) Int. Cl.: B65F 1/14, B65F 9/00, B60P 1/34, B65G 65/23, B65F 1/02

(54) **ENSEMBLE DE MOYENS POUR LA COLLECTE DE DÉCHETS ISSUS DU TRI SÉLECTIF EN PORTE À PORTE EN ZONE URBANISÉE**

(30) Priorité: 14.09.2020 FR 2009276
(71) Demandeur: Design Way, 17100 Saintes (FR)
(72) Inventeur: Fournier, Frédéric, . (FR)

(57) **Abrégé**

Ensemble de moyens pour la collecte des déchets en porte à porte cet ensemble comprenant une benne (2) de transport posée au sol, un petit véhicule (3), de préférence à motorisation électrique portant un caisson(4) de stockage temporaire, un moyen (5) de levage en vue de lever le caisson de stockage et un moyen (6) de basculement dudit caisson en vue de le vider dans la benne cet ensemble étant caractérisé en ce que le caisson et le moyen de basculement dudit caisson constitue un sous ensemble (10) mobile en translation par rapport au châssis, ce sous ensemble pouvant circuler au-dessus du haut de la benne qui, à cet effet, porte deux pistes longitudinales d'appui pour le sous-ensemble. Figure pour l'abrégé : figure2..

## Description

On connait, pour la collecte des déchets en porte à porte , des camions (Benne à ordures ménagères (BOM) équipés d'au moins un caisson de stockage temporaire, d'un dispositif de manœuvre d'un conteneur à déchets équipé de roue et d'un couvercle pour les vider par retournement dans le caisson de stockage précité. Lorsque le caisson de stockage est rempli, le camion se déplace vers une zone de réception des déchets où il videra son caisson de stockage.

Deux inconvénients majeurs pénalisent cet ensemble.

Un tel engin est couteux , le cout d'exploitation est également élevé du fait que ce soit le même véhicule qui opère à la fois la collecte en zone urbaine et le transport des déchets collectés vers les centres de tri ou de valorisation souvent très éloignés des centres villes

Un autre inconvénient résulte de son encombrement et de son poids qui limite son accessibilité au centre-ville où sur les voies étroites de certains villages touristiques.

Enfin la BOM utilise un moyen de compactage puissant qui rend difficile le traitement des déchets après collecte au niveau des centres de tri et de valorisation.

Pour réduire le cout lié au transport il est connu de faire appel à une benne posée au sol et à un dispositif mobile pouvant se saisir d'une poubelle, la lever et la retourner au-dessus de la benne. Ce dispositif mobile n'est pas approprié pour circuler en ville. Le remplissage se fait au long des parois longitudinales du caisson sans remplir la partie médiane longitudinale d'où un remplissage non homogène qui n'optimise pas le volume de déchets récupérés.

Il existe des dispositifs de manœuvre des poubelles qui comportent un châssis et des roues pour circuler au sol. Ce châssis comporte une structure qui, se saisissant d'une poubelle la lève pour l'amener au-dessus du bord haut de la benne en vue de la basculer pour vider le contenu de la poubelle. Cet ensemble nécessite en plus un véhicule pour acheminer les poubelles du point de collecte vers la benne.

Ce petit véhicule peut collecter les déchets dans les conteneurs en surface ou enterrés pour la collecte en apport volontaire.

L'invention propose une nouvelle solution.

A cet effet, l'invention a pour objet un ensemble de moyens pour la collecte des déchets en porte à porte opérables avec un véhicule de petites dimensions avec un caisson de stockage temporaire pour réception de déchets lors de la collecte notamment en porte à porte .

Le caisson peut être équipé d'un bras de levage de conteneurs poubelles et/ou , de trappes latérales pour les déchets colisées dans des sacs et éventuellement d'une pelle de compactage

L'ensemble de moyens comprends également une benne de transport de déchets de grand volume posé à terre au niveau du périmètre de collecte et transportable par un poids lourd équipé d'un bras de levage (benne de type Ampliroll).

Le véhicule de collecte une fois rempli vient se présenter devant la benne de réception des déchets autant de fois que nécessaire jusqu'au remplissage complet de la benne au sol.

Cet ensemble comprenant une benne de transport posée au sol, un petit véhicule, de préférence à motorisation électrique, portant un caisson de stockage temporaire, un moyen de levage en vue de lever le caisson de stockage et un moyen de basculement dudit caisson en vue de le vider dans la benne cet ensemble étant caractérisé en ce que le caisson et le moyen de basculement dudit caisson constitue un sous ensemble mobile en translation par rapport au châssis du dit véhicule, ce sous ensemble pouvant circuler au-dessus du haut de la benne qui, à cet effet, porte deux pistes longitudinales d'appui pour le sous-ensemble. Ces moyens permettent donc de vider le caisson dans la benne en différentes zones de la benne pour mieux répartir les déchets dans la benne au long de son axe longitudinal et ainsi optimiser le chargement de déchets pas ou peu compactés .

L'invention sera bien comprise à la lecture de la description ci-après faite à titre d'exemple non limitatif en regard du dessin qui représente :
[Fig.1]:Ensemble de moyens pour la collecte de déchets.
[Fig.2]:Ensemble selon la [Fig.1] en phase d'approche.

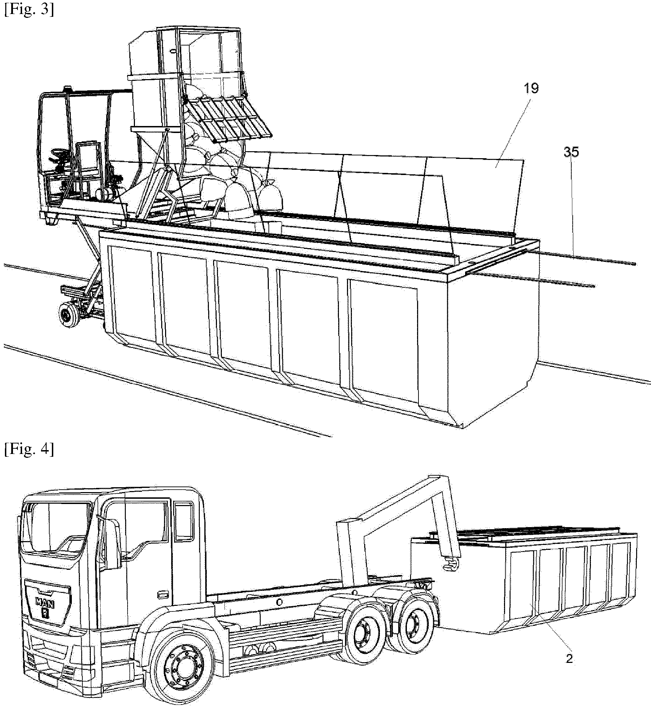

[Fig.3]: Ensemble selon la [Fig.1] en phase de vidage.
[Fig.4]:Une benne et son camion.

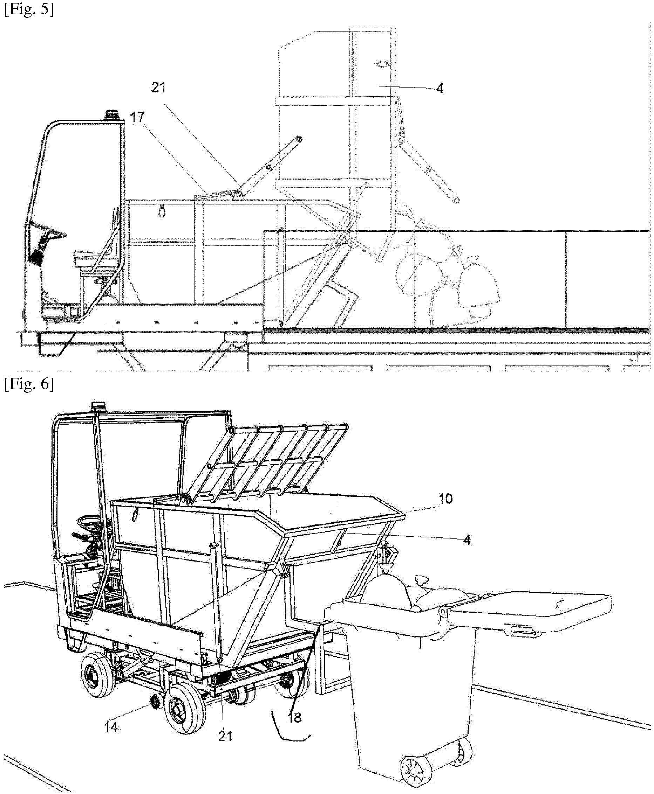

[Fig.5]:Sous ensemble en cours de vidage.
[Fig.6]:Un petit véhicule en cours de chargement.

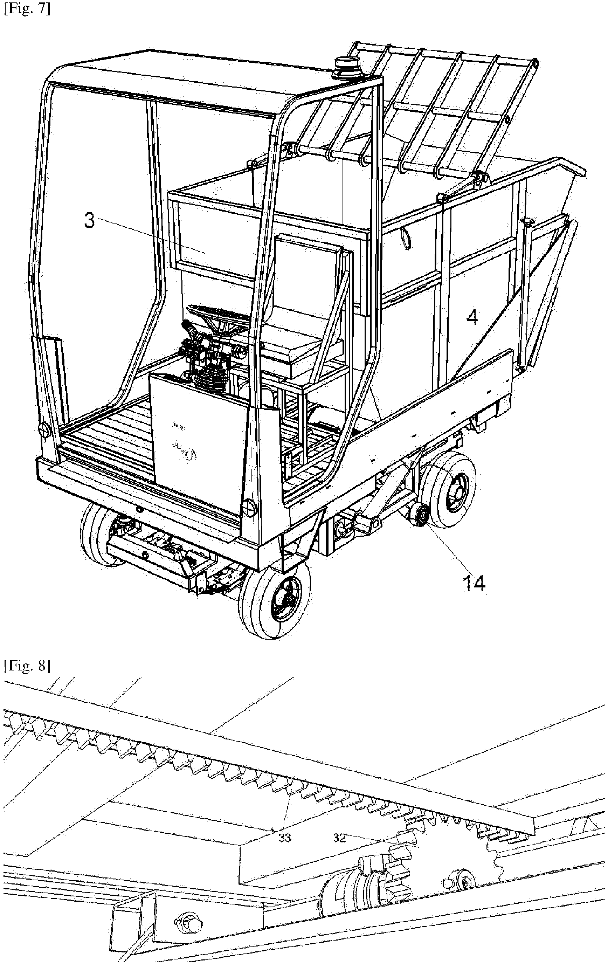

[Fig.7] :Le petit véhicule en vue de ¾ avant.
[Fig.8] :Un exemple de moyen moteur.

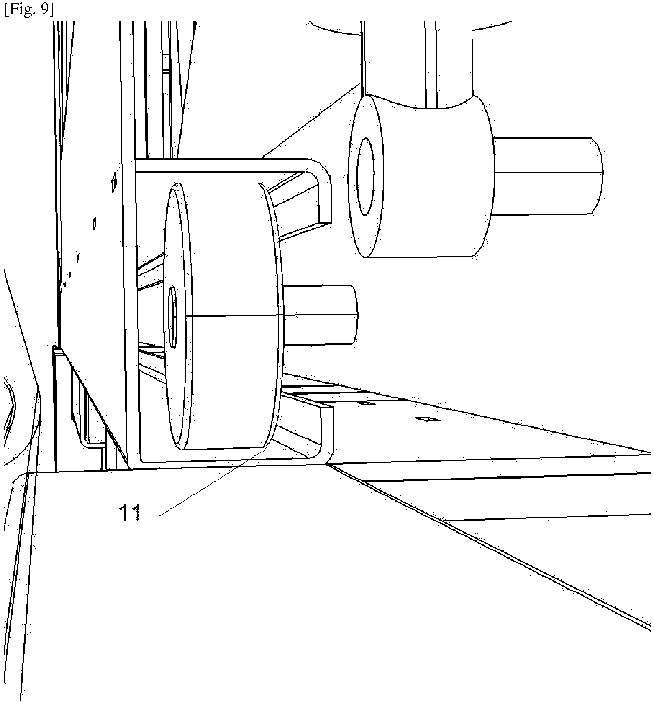

[Fig.9] : La piste.

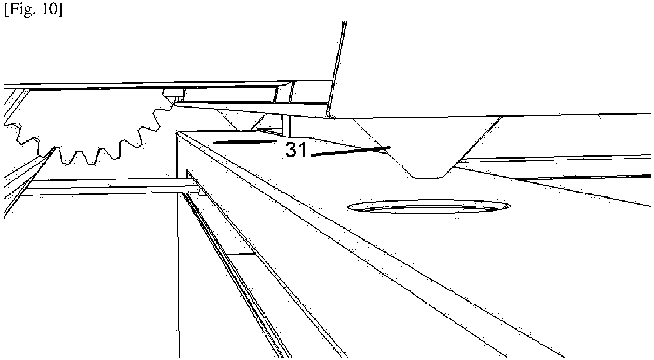

[Fig.10] :Centrage avec la benne

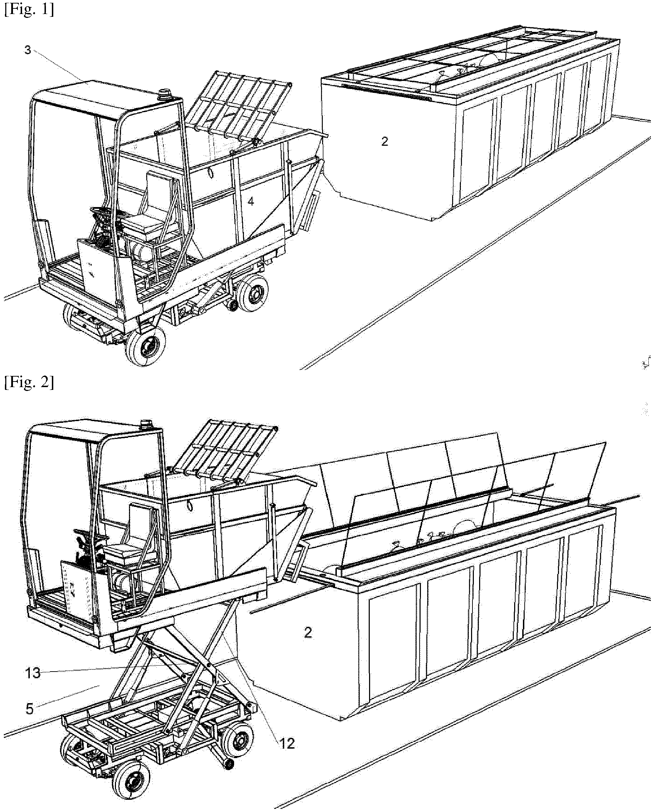

En se reportant au dessin et notamment à la [Fig.1], on voit un ensemble 1 de moyens pour la collecte des déchets en porte à porte, cet ensemble comprenant une benne 2 de transport posée au sol, un petit véhicule 3, de préférence à motorisation électrique , portant un caisson 4 de stockage temporaire pour les déchets, un moyen 5 de levage en vue de lever le caisson 4 de stockage et un moyen 6 de basculement dudit caisson en vue de le vider dans la benne cet ensemble étant caractérisé en ce que le caisson 4 et le moyen 6 de basculement dudit caisson constitue un sous-ensemble 10 mobile en translation par rapport au châssis du petit véhicule, ce sous-ensemble pouvant circuler au-dessus du haut de la benne qui, présente à cet effet, deux pistes 11 longitudinales d'appui pour la circulation du sous-ensemble.

Le petit véhicule porte le sous-ensemble mobile 10 qui, par un moyen 5 de levage est levé au-dessus du bord haut de la benne afin de prendre appui sur les pistes. Les pistes ont au moins un profil en U de sorte que les organes de roulement soient guidés latéralement.

Le moyen de levage est une structure formée par des bras 12 disposés en X formant ainsi une paire de ciseaux articulés autour d'un axe 13 transverse au sens de déplacement conventionnel du véhicule. Cette structure, en partie basse s'appuie sur le châssis du véhicule et en partie haute sur une plateforme d'accueil du sous-ensemble 10.En modifiant l'angle que forme les bras d'un ciseau ,on peut faire monter ou descendre le faux-châssis et donc le sous-ensemble.

Lors du levage et avant celui-ci, des moyens 14 de stabilisation du petit véhicule sont déployés pour stabiliser le dit véhicule.

Il s'agit de jambes qui s'étendent de part et d'autre du petit véhicule et présentent, en extrémités libres, des roues nécessaires car le véhicule doit, après avoir levé sa charge, se déplacer vers la benne pour prendre appui dessus. Si on avait utilisé un patin, il n'aurait pas permis un déplacement où cela aurait été plus délicat.

Pour cette approche du petit véhicule en marche arrière, l'ensemble comprend des moyens 35 d'aide au positionnement tels des guides 35 déployés depuis la benne. Une caméra pourra également aider au positionnement en approche et le positionnement du caisson au-dessus de la benne pour optimiser le remplissage Dès que l'extrémité de la plateforme d'accueil est au-dessus de la benne, cette plateforme sera descendue pour être solidarisée avec la benne. Des plots 31 de centrage (forme conique) peuvent être prévus pour pénétrer dans des cavités situées sur les parties hautes des extrémités de la benne pour ainsi immobiliser la plateforme du petit véhicule par rapport à la benne. Cette mise position étant réalisée on va pouvoir éventuellement déplacer le sous-ensemble mobile sur les pistes de la benne car les roues qui équipent le sous ensemble mobile se trouvent dans l'axe des pistes Pour se déplacer, le sous ensemble équipé d'organe de roulement est motorisé soit au moyen d'un moteur, par exemple électrique entrainant des roues motrices soit par d'autres moyens de type crémaillère ou vérins par exemple.

Il peut donc se déplacer au moyen de roues dentées 32 engrenant avec une crémaillère 33 ou encore en utilisant des actuateurs pneumatiques ou hydrauliques. On notera que la crémaillère est au-dessus de la roue dentée ce qui évite le basculement de l'ensemble le caisson est basculer pour être vidé .Une télécommande ou radio-commande permet d'agir à distance pour les différentes manœuvres.

Le caisson 4 a un côté incliné par rapport au fond pour former un bec verseur lorsque le caisson est pivoté à l'aide d'au moins un vérin 17 éxercant sa force sur un compas En équipant la benne de pistes 11, le contenu du caisson peut être déposé tout au long de l'axe longitudinal de la benne. Cela permet de ne pas utiliser de compacteur si on veut faire du tri sélectif.

Avantageusement le faux châssis porte la cabine du conducteur qui se situera en hauteur lors du déchargement. Cette situation améliore son visuel sur l'opération de déchargement.

Avantageusement c'est toute la plateforme qui s'élève permettant ainsi au sous ensemble mobile qui comprend un caisson de stockage temporaire basculant de pouvoir disposer de deux rails de grande longueur pour le guidage sur la plateforme et rester toujours engagé au niveau des deux galets avants qui équipe ce sous ensemble mobile , même dans le cas de la plus grande translation qui permets de vider les déchets jusqu'à la partie milieu de la benne .

En aucun cas le chariot ne sort complètement des guidages ce qui permet une rentrée du chariot mobile en position initiale dans les meilleures conditions

Pour remplir complétement la benne le véhicule de collecte se présentera aux deux extrémités de la benne.

Dans une forme de réalisation, le sous-ensemble comprend un videur 18 de poubelle.

Des volets 19 sont prévus pour fermer l'espace ouvert sur le dessus de la benne.

Ces volets ont plusieurs fonctions. Par exemple ils réduisent la dispersion des odeurs.

Ils canalisent la chute des déchets dans la benne.

Ils évitent que les déchets s'envolent lors du transport de la benne du périmètre de collecte vers le centre de tri ou de revalorisation distant.

Pour son fonctionnement (déplacement et évacuation des déchets) au-dessus de la benne, le caisson de stockage temporaire est relié à la plateforme élévatrice du véhicule via des câble de liaison pour l'énergie et la communication (non représentés).

Dans une autre version, le chariot du caisson de stockage pourrait transporter sa propre énergie nécessaire pour la translation et la rotation du caisson.

## Revendications

1. Ensemble de moyens pour la collecte des déchets en porte à porte cet
ensemble comprenant une benne (2) de transport posée au sol, un petit véhicule (3) portant un caisson(4) de stockage temporaire, un moyen (5) de levage en vue de lever le caisson de stockage et un moyen (6) de basculement dudit caisson en vue de le vider dans la benne, cet ensemble étant **caractérisé en ce que** le caisson et le moyen de basculement dudit caisson constitue un sous ensemble (10) mobile en translation par rapport au châssis du véhicule (3), la benne portant deux pistes longitudinales d'appui pour le sous ensemble, et le sous ensemble étant configuré pour circuler en translation au-dessus du haut de la benne (2) en appui sur lesdites pistes (11) longitudinales pour pouvoir répartir les déchets dans la benne au long de son axe longitudinal.

2. Ensemble de moyens selon la revendication 1 **caractérisé en ce que** le
moyen (5) de levage est une structure formée par des bras (12) disposés en X et articulés autour d'un axe (13) transverse au sens de déplacement conventionnel du véhicule.

3. Ensemble de moyens selon la revendication 2 **caractérisé en ce que** la
structure s'appuie en partie basse sur le châssis du véhicule et en partie haute sur un faux châssis qui porte le sous-ensemble (10).

4. Ensemble de moyens selon la revendication 1 **caractérisé en ce que** le
petit véhicule comprend des moyens (14) de stabilisation.

5. Ensemble de moyens selon la revendication 4 **caractérisé en ce que** les
moyens de stabilisation sont des jambes présentant, en extrémités libres, des roues.

6. Ensemble de moyens selon la revendication 1 **caractérisé en ce que** le
sous-ensemble est équipé d'organe de roulement et il est motorisé.

7. Ensemble de moyens selon la revendication 1 **caractérisé en ce que** les
pistes (11) ont un profil en U.

8. e Ensemble de moyens selon la revendication 1 **caractérisé en ce que**
l'ensemble comprend des aides (35) au positionnement du petit véhicule par rapport à la benne.

9. Ensemble de moyens selon la revendication 8 **caractérisé en ce qu'**il
comprend des guides (35) pouvant être déployés depuis la benne.

10. Ensemble de moyens selon la revendication 3 **caractérisé en ce que** des
plots (31) de centrage sont prévus pour pénétrer dans des cavités situées sur les parties hautes des extrémités de la benne pour ainsi immobiliser le faux châssis du petit véhicule par rapport à la benne.
